# EUROPEAN PATENT SPECIFICATION

(11) **EP 2 109 066 B1**
(45) Date of publication and mention of the grant of the patent: **01.03.2017**
(21) Application number: 09250758.1
(22) Date of filing: 19.03.2009
(51) Int. Cl.: G06K 15/02, G06F 3/12

(54) **Image output apparatus**
Bildausgabevorrichtung
Appareil de sortie d'images

(30) Priority: 31.03.2008 JP 2008093652
(43) Date of publication of application: 14.10.2009
(73) Proprietor: Brother Kogyo Kabushiki Kaisha, Nagoya-shi, Aichi 467-8561 (JP)
(72) Inventor: Mizutani, Norio, Nagoya-shi Aichi-ken 467-8562 (JP); Sakurai, Kunihiko, Nagoya-shi Aichi-ken 467-8562 (JP)
(74) Representative: Smith, Samuel Leonard

(56) References cited:
- EP-A1- 0 571 168
- JP-A- 2006 137 148
- US-A1- 2006 203 277

## Description

The present invention relates to an image output apparatus that outputs a plurality of pieces of image data as one page of an output image.

As set forth in Japanese Patent Application Publication No. 2006-85551, many printers create image data that has a bit-mapped format from data that is described by a page description language. The image data is written into a page memory or a band memory. The printer prints the image data on a print medium in accordance with the stored contents of the page memory or the band memory. Moreover, the page description language may be termed "PDL" below.

Further, the technique of printing a plurality of pieces of image data onto one page of a print medium (i.e. index printing) is known to the art. For example, a technique for index printing is set forth in US Patent Application Publication No. 2007/227335 . US 2006/203277A describes an accounting device, an accounting method and an accounting program that can realize appropriate color accounting for image forming processing. The accounting device judges accounting for image forming processing, and includes a use amount estimation unit that estimates a use amount of color toner of a job which performs image forming processing, and an accounting judgment unit that determines color accounting in case the color toner use amount estimated by the use amount estimation unit exceeds a predetermined threshold value. JP 2006 137148 aims to perform the collating/acquisition of image data for display and the collective management of image data for printing, in a printing system which generates intermediate print data of such a format as to be read by a printer from image data generated by a computer, then prints an image using the intermediate print data, and displays a thumbnail image based on the image data for display generated from the image data generated by the computer. In a printer driver of the computer, the intermediate print data of such a format as to be read by the printer including the image data and the image data for display are generated as one file. Next, the intermediate print data are stored in an intermediate print data storage part of the printer, and a printing operation is performed based on the image data of the stored intermediate print data. Further, the thumbnail image is displayed based on the image data for display of the intermediate print data. EP 0 571 168 A describes an image processing apparatus and a method therefor including a discrimination program for discriminating whether a translation program for translating a printer language can translate an externally input printer language is input and stored. It is discriminated whether the translation program can translate the externally input printer language, using the stored discrimination program.

A plurality of types of PDL exist in recent years, such as for example, PDF (Portable Document Format), PS (Post Script), etc. Conventional printers have modules (programs) that, for each of the plurality of types of PDL, create image data from the data described by the PDL and write this image data into the memory. Each of these modules is an independent module, and each performs an exclusive process to write into the memory. That is, in the case where a process is performed to create image data in accordance with one module and to write this image data into the memory (page memory or band memory), it is not possible to create image data in accordance with the other module and write this into the same memory. As a result, it is not possible to create page memory or band memory in which a plurality of pieces of image data created from different types of PDL is written. This means that a plurality of pieces of image data created from different types of PDL cannot be index printed as one page of an output image. Although a technique to index print a plurality of pieces of image data created from the same PDL exists, it is thought to be impossible to realize a technique in which a plurality of pieces of image data created from different types of PDL is index printed onto one page.

The technique set forth in the present specification allows a plurality of pieces of image data created from different types of PDL to be output as one page of an output image. According to the present invention, there is provided an image output apparatus as defined in appended claim 1 and a computer program as defined in appended claim 11.

An image output apparatus set forth in the present specification may be configured to create one piece of image data in a bit-mapped format from PDL data described by a page description language, and output a plurality of pieces of image data as one page of an output image. The term "page description language" in the present specification includes all types of languages for describing data utilizing the concept of a page. As described above, PDF, PS, etc. can be given as examples of the page description languages. Further, among the languages utilized in a word processing software, spreadsheet software, drawing software, etc., languages for describing data that utilize the concept of a page may also be termed "page description language". Moreover, the term "output as one page of an output image" should be interpreted in its broadest sense, and includes not only printing onto one page of a print medium, but also forming a display on one display screen. In the case of the latter example, the unit of "one page" may refer to one display screen, or may refer to one window.

The image output apparatus may comprise a data file input device, a position determination device, an intermediate language data creation device, a memory, an image data creation device and an image data output device. The data file input device may be configured to input data files. The data files may include at least two data files. One of the two data files may be described by a first page description language. The other of the two data files may be described by a second page description language. The first PDL may be different from the second PDL. In the case for example where the data files are sent from another device (a personal computer, a server, a portable memory, etc.) to the image output apparatus, the data file input device may input the data files sent from the other device.

The position determination device may be configured to determine, for each of the data files, with respect to at least one page of PDL data included in the data file, a position in which one piece of image data corresponding to the PDL data is to be disposed within the output image. The position determination device may determine an absolute position in which each piece of image data is to be disposed. For example, the position determination device may determine a coordinate A for the one page of PDL data corresponding to first image data, and may determine another coordinate B for the one page of PDL data corresponding to second image data. Moreover, in this case, in a case for example where the image data has a rectangular shape, the position within the output image may be expressed by two vertex coordinates that are present diagonally, or may be expressed by one vertex coordinate and the size of the image data in its crosswise direction and lengthwise direction. Further, in a case where the size of the image data in its crosswise direction and lengthwise direction is determined, the position within the output image may be expressed by only one coordinate of the image data (for example, one vertex coordinate or a coordinate of the center of the image data). Alternatively, the position determination device may determine a relative positional relationship for the position in which each piece of image data is to be disposed. For example, in the case where the position determination device has determined the coordinate A for the one page of PDL data corresponding to the first image data, the position determination device may determine a positional relationship for the one page of PDL data corresponding to the second image data using the coordinate A as a standard therefor (for example, a position in a plus X direction at a predetermined distance from the coordinate A, etc. may be oriented to the one page of PDL data corresponding to the second image data).

The intermediate language data creation device may be configured to create, for each of the data files, with respect to at least one page of PDL data included in the data file, one piece of intermediate language data described by an intermediate language from the PDL data. For example, the intermediate language data creation device may create intermediate language data described by an intermediate language from at least one page of PDL data included in a data file described by the first PDL, and may create intermediate language data described by the same intermediate language from at least one page of PDL data included in a data file described by the second PDL. Moreover, the intermediate language may, for example, be vector format data. In this case, if the first PDL is vector format data, the vector format data of the intermediate language may be created from the vector format data of the first PDL. Further, in a case where the second PDL is data that has a bit-mapped format, the vector format data of the intermediate language thereof may be created from the data having a bit-mapped format of the second PDL.

The memory may be utilized to store image data. The memory may be a page memory, or may be a band memory. The image data creation device may be configured to create, for each piece of the intermediate language data, one piece of image data from the piece of the intermediate language data, and write the one piece of the image data in a position within the memory corresponding to the position determined by the position determination device with respect to the original PDL data of the one piece of the image data. The image data output device may output the plurality of pieces of image data as one page of the output image in accordance with the stored contents of the memory.

According to the above configuration, it is possible to convert data files described by different types of PDL into the same intermediate language. As a result, it is possible to use, for a plurality of types of PDL, one module (program) in common to create image data from the intermediate language data and write this image data into the memory. Since it is possible to write the image data created from a plurality of types of PDL into the memory in accordance with the common module, a process of exclusively writing into a memory for each type of PDL is not performed. It is possible to write a plurality of pieces of image data created from different types of PDL into the same memory. As a result, it is possible to output a plurality of pieces of image data created from different types of PDL as one page of an output image.

The intermediate language data creation device and the image data creation device may perform a process to create the intermediate language data, create the image data from the intermediate language data, and write the image data into the memory. There is no particular restriction on a quantitative composition of a unit for executing the aforesaid process. For example, in a case where one page of output image is the unit for executing the process, the intermediate language data creation device and the image data creation device may create the intermediate language data from all of the original PDL data of the plurality of pieces of image data that are to be disposed on one page of an output image, and then start to create the image data and write the image data into the memory. However, in this method, a large memory capacity is required to store all the intermediate language data corresponding to the whole one page of output image. In order to perform the process with a smaller memory capacity, it is also possible to adopt a technique in which, before all of the intermediate language data corresponding to one page of an output image has been created, image data is created from the intermediate language data that has already been created, then the intermediate language data from which the image data has been created is deleted, and only the image data is compressed and stored. However, in this method as well, it is necessary to store the compressed data until all of the intermediate language data corresponding to one page of an output image has been created. In order to perform the process with a smaller memory capacity, the following configuration may be adopted.

That is, the intermediate language data creation device and the image data creation device may be configured to perform a process in a unit of one piece of the PDL data (that is, in a unit of one piece of image data that is to be created). This process may include the following: creating one piece of the intermediate language data from one piece of the PDL data; creating one piece of the image data from the one piece of intermediate language data; writing the one piece of image data in a position within the memory corresponding to the position determined by the position determination device with respect to the original PDL data of the one piece of image data; and deleting the one piece of intermediate language data. As described above, in the case where the one page of the output image is the unit, it is necessary to have a large capacity memory in order to store all of the intermediate language data (or the compressed data) corresponding to the whole of the one page of the output image. By contrast, with the present technique, the process is performed with one piece of PDL data being the unit for executing the process, and consequently, without waiting for all of the intermediate language data corresponding to the whole one page of the output image to be created, it is possible to convert the data from intermediate language data into image data and write this image data into the memory, and then to delete the intermediate language data to which the process has been completed. As a result, it is possible to perform the process with a smaller memory capacity.

The above technique of performing the process with one piece of the PDL data as a unit can also be expressed in the manner below. If predetermined intermediate language data is created from the PDL data included in a data file of the data files before all the intermediate language data corresponding to one page of the output image has been created, the image data creation device may create one piece of image data from the predetermined intermediate language data, and start to write the one piece of image data in the position within the memory corresponding to the position determined by the position determination device with respect to the original PDL data of the one piece of image data. According to this configuration, the image data creation device can convert the intermediate language data that has already been created into image data before the creation of all the intermediate language data corresponding to one whole page of the output image is completed, and can write this already-created image data into the page memory or the band memory. In this case, it is possible to delete the processed intermediate language data which has been converted into the image data and written into the memory. It is thereby possible to perform the process with lower memory capacity.

Moreover, in the above technique, the above process may be performed for one piece of PDL data, and then the above process may again be performed for the next one piece of PDL data. That is, only one process thread for performing the above process may be activated. However, in order to perform the process more efficiently, a plurality of processes may be performed in parallel. Various examples of performing a plurality of processes in parallel will be set forth below.

The intermediate language data creation device may be configured to perform a plurality of first processes in parallel. Moreover, the term "perform in parallel" does not mean only to perform the processes simultaneously, but also includes activating a plurality of process threads in parallel (in the case where the processes are not being performed simultaneously). A number of the plurality of the first processes may be identical to a number of the plurality of pieces of image data to be output as one page of the output image. Each of the first processes may include creating the intermediate language data from the original PDL data of different one piece of image data. It may also be expressed that, in each of the first processes, the intermediate language data is created from the original PDL data that is different from those used in the other first processes. This configuration is effective in the case where, as below, the page memory is utilized.

That is, the memory may be a page memory configured to store the image data corresponding to at least one page of the output image. The image data creation device may be configured to perform a plurality of second processes in parallel. A number of the plurality of second processes may be identical to a number of the plurality of pieces of image data to be output as one page of the output image. Each of the second processes may include: creating one piece of the image data from the intermediate language data created in different one first process among the plurality of first processes; writing the one piece of image data in the position within the memory corresponding to the position determined by the position determination device with respect to the original PDL data of the one piece of image data, and deleting the intermediate language data created in the different one first process. According to this configuration, a process can be performed in which, with the one piece of PDL data being the unit of the process, the intermediate language data is created, and the image data is created from the aforesaid intermediate language data, and the aforesaid image data is written into the page memory.

Moreover, one first process and one second process may be performed by one process thread. That is, in one process thread, the process of creating the intermediate language data (the first process), and the process of creating the image data from the intermediate language data and writing this image data into the page memory (the second process) may be performed. In this case, "performing a plurality of process threads in parallel" is identical to "performing a plurality of first processes in parallel and performing a plurality of second processes in parallel". That is, the intermediate language data creation device and the image data creation device may be configured to perform a plurality of process threads in parallel (process threads to perform the first processes and the second processes). A number of the plurality of process threads may be identical to a number of the plurality of pieces of image data to be output as one page of the output image. Each of the process threads may include the first process and the second process.

The above image output apparatus may be configured to output the plurality of pieces of image data which is disposed in a matrix pattern of M rows and N columns as one page of the output image. Moreover, the rows are aligned vertically, and the columns are aligned horizontally. For example, in a case where the image output apparatus prints the image data, "horizontal" may be a direction orthogonal to the feeding direction of the print medium and "vertical" may be the feeding direction of the print medium. Further, in a case for example where the image output apparatus displays the image data, "horizontal" may be the crosswise direction of the display screen, and "vertical" may be the lengthwise direction of the display screen. M may be 1 (in this case N is an integer equal to or greater than 2), or may be an integer equal to or greater than 2. Further, N may be 1, (in this case M is an integer equal to or greater than 2), or may be an integer equal to or greater than 2. Alternatively, a plurality of pieces of image data that is not aligned in this manner may be output as one page of the output image. For example, a plurality of pieces of image data may be output while being aligned along a circumference, and a plurality of pieces of image data may alternately be output while being aligned in a column along an oblique direction in the output image.

In a case where N is an integer greater than 1, the intermediate language data creation device may be configured to perform first processes in parallel. A number of the first processes may be identical to N. Each of the N first processes may include creating the intermediate language data from the original PDL data of different one piece of image data that is included in the N pieces of image data which are to be disposed on the same row. Moreover, in a case where M is an integer greater than 1, each of the N first processes may include the following: (1) creating the intermediate language data from the original PDL data of the image data to be disposed on a first row; (2) creating the intermediate language data from the original PDL data of the image data to be disposed on a second row which is subsequent to the first row; and (3) determining whether the second row is an M-th row. In a case where the determination of (3) is a positive determination, the first process may end. In a case where, on the other hand, the determination of (3) is a negative determination, the process of (2) may be performed by utilizing the second row in (3) as the first row of (2). This configuration is effective in the case where the band memory is utilized as described below.

That is, the memory may be a band memory configured to store the image data corresponding to at least 1 band of the output image. The image data creation device may perform second processes in parallel. A number of the second processes may be identical to N. Each of the N second processes may include the following: creating one piece of the image data from the intermediate language data created in different one first process; writing the one piece of image data in the position within the memory corresponding to the position determined by the position determination device with respect to the original PDL data of the one piece of image data; and deleting the intermediate language data created in the different one first process. According to this configuration, it is possible to perform, with one piece of PDL data as the unit, a process in which intermediate language data is created, image data is created from the intermediate language data and the image data is written into the band memory.

The intermediate language data creation device and the image data creation device may be configured to perform process threads in parallel. A number of the process threads may be identical to N. Each of the N process threads may include the first process and the second process. Moreover, in this case, "performing N number of process threads in parallel" (each of which being the process thread for performing the first process and the second process) is identical with "performing N number of the first process in parallel and performing N number of the second process in parallel".

The position determination device may determine, for each of the data files, the position within the output image in which the one piece of image data corresponding to a first page of PDL data included in the data file is to be disposed. In this case, the intermediate language data creation device may create, for each of the data files, intermediate language data described by the intermediate language from only the first page of PDL data included in the data file. According to this configuration, a plurality of pieces of image data created from the first page of the data files can be output as one page of an output image.

The position determination device may determine the position within the output image with respect to the PDL data based on the number of pieces of image data to be output as one page of the output image. The position determination device may determine the position within the output image with respect to the PDL data based on the size of the one page of the output image. In the case where a plurality of pieces of image data that are disposed in a matrix pattern of M rows and N columns are to be output as one page of an output image, the position determination device may determine the position within the output image for the PDL data based on M and N. M and N may be determined by the user.

The printer may print the plurality of pieces of image data onto one page of a print medium. The printer may create the image data in band units. A "band" is a unit smaller than one page. That is, one page is a collection of a plurality of bands. The printer may print in sequence from one end to the other end of the print medium. In this case, the printer may (1) create a band memory storing the image data to be printed on a band that have a predetermined width from the one end of the print medium, (2) create a band memory storing the image data to be printed on the succeeding band that has the above predetermined width, and (3) repeat (2) above until a band memory storing the image data to be printed on a band having the predetermined width and including the other end of the print medium has been created.

Moreover, the technique set forth in the present specification may be utilized in various modes of a method for controlling the image output apparatus, in a computer program for realizing the image output apparatus, in a storage medium in which the computer program is stored, etc.

- FIG. 1: shows an example of the configuration of a printer network system.
- FIG. 2: shows a configuration of a controller.
- FIG. 3: shows a flow chart of a print process.
- FIG. 4: shows a continuation of the flow chart of FIG. 3.
- FIG. 5: shows a flow chart of a process thread.
- FIG. 6: schematically shows data files and a print medium.
- FIG. 7: schematically shows image data and a band memory.
- FIG. 8: shows a flow chart of a print process performed in a second embodiment.
- FIG. 9: shows a flow chart of a process thread performed in the second embodiment.

### (First Embodiment)

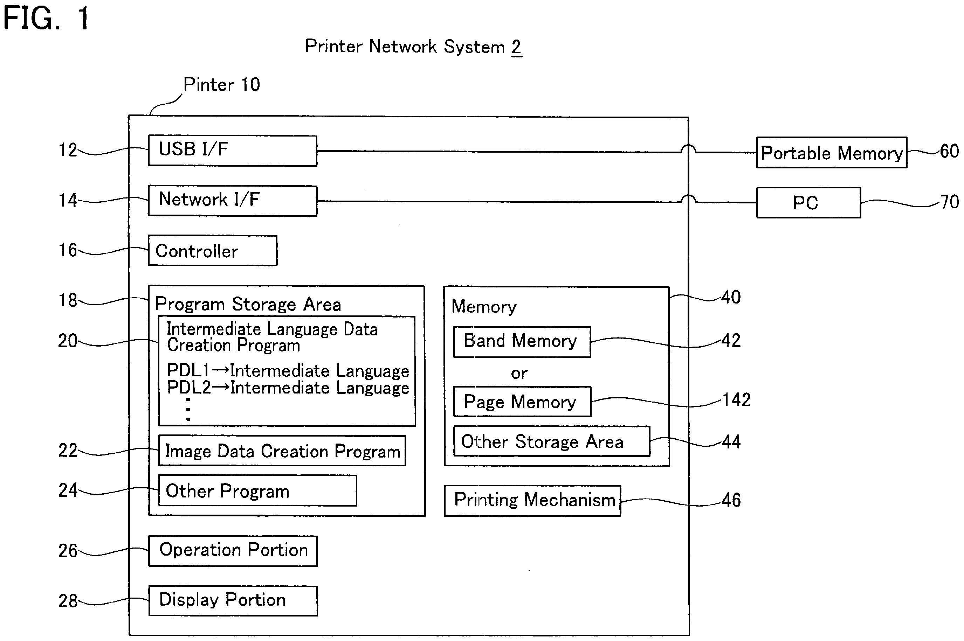

An embodiment will be described with reference to the figures. FIG. 1 shows a printer network system 2 of the present embodiment. The printer network system 2 comprises a printer 10, a portable memory (a removable memory) 60, and a PC 70. The portable memory 60 is connected with a USB interface 12 of the printer 10. The portable memory 60 stores data files (not shown) described by a plurality of types of PDL. That is, the portable memory 60 stores at least a first data file described by a first type of PDL, and a second data file described by a second type of PDL. The printer 10 and the PC 70 are capable of communicating with each another via a LAN circuit. The PC 70 stores data files (not shown). The PC 70 is capable of commanding the printer 10 to print the data file in accordance with an operation of a user. In this case, the PC 70 converts the data file into a PDL in accordance with the command of the user, and sends the data file described by the PDL to the printer 10.

### (Configuration of the Printer)

A simple version of the configuration of the printer 10 is shown in FIG. 1. The printer 10 comprises the USB interface 12, a network interface 14, a controller 16, a program storage area 18, an operation portion 26, a display portion 28, a memory 40, and a printing mechanism 46, etc. The portable memory 60 is connected with the USB interface 12. The data files stored in the portable memory 60 are input into the USB interface 12. The LAN circuit is connected with the network interface 14. The LAN circuit is connected with the PC 70. The printer 10 is capable of communicating with the PC 70 via the network interface 14.

The controller 16 performs processes in accordance with the programs stored in the program storage area 18. The contents of the processes performed by the controller 16 will be described in detail below. The program storage area 18 stores an intermediate language data creation program 20, an image data creation program 22, and another program 24.

The intermediate language data creation program 20 is a program for converting data described by the PDL (this may be termed "PDL data" below) into data described by the intermediate language (this may be termed "intermediate language data" below). The intermediate language data creation program 20 includes programs corresponding to each of the plurality of types of PDL. For example, the intermediate language data creation program 20 stores a program to convert PDL data described by PDF into intermediate language data, and a program to convert PDL data described by PS into intermediate language data.

The method for creating bit-mapped data from the PDL data via the intermediate language data (termed "the former method" below) is effective in the points given below when compared to the method for creating bit-mapped data directly from the PDL data (termed "the latter method" below). Many PDLs are capable of describing the same types of data. For example, many PDLs are capable of describing linear gradation or text. An exemplary case will be described in which a first PDL and a second PDL respectively describe the same linear gradation (for example, a gradation in which red changes to blue from left to right).

In the case of the above example, two programs are necessary in order to adopt the latter method; namely, a program for creating bit-mapped data from linear gradation vector data described in the first PDL format, and a program for creating bit-mapped data from linear gradation vector data described in the second PDL format.

On the other hand, when the former method is adopted, the intermediate language data (vector data) is created from the linear gradation vector data of the first PDL, and the intermediate language data is created from the linear gradation vector data of the second PDL. In this case, identical intermediate language data is created. Thereupon, if there is a program to convert these intermediate language data into bit-mapped data, the bit-mapped data can be created irrespective of whether the linear gradation is described by the first PDL or the second PDL That is, in order to adopt the former method, it is necessary to have three programs: a first program for creating the intermediate language data from the linear gradation vector data of the first PDL, a second program for creating the intermediate language data from the linear gradation vector data of the second PDL and a third program for creating bit-mapped data from the intermediate language data. That is, in the programs for processing the first PDL and the second PDL, the third program (the image data creation program 22 in the example of FIG. 1) for creating the bit-mapped data from the respective linear gradation vector data can be used in common. Compared with the latter method, the former method requires the first program and second program to be provided anew. However, the program to convert one type of vector data (the PDL) into other type of vector data (the intermediate language) need not be particularly large in its contents size. Rather, the program to convert the vector data into the bit-mapped data is likely to be larger. Even though the first program and the second program are required anew, the entire program can be smaller than in the case of the latter method due to the third program being used in common.

The image data creation program 22 is a program for converting the intermediate language data into the bit-mapped format image data (bit-mapped data with two levels of gradation in the present embodiment; hereinbelow referred to as 'two-level bit-mapped data'). In the present embodiment, the two-level bit-mapped data is created directly from the intermediate language data. However, the technique of the present embodiment can also be utilized in the case where bit-mapped data with multi-leveled gradation (for example, 256 levels) is converted from the intermediate language data, and two-level bit-mapped data is converted from that bit-mapped data. The program 24 includes other various programs for controlling the devices of the printer 10. For example, the program 24 stores a program for communicating with the PC 70 (a protocol), a program for controlling the displayed contents of the display portion 28, a program for controlling the driving of the printing mechanism 46, etc.

The operation portion 26 has a plurality of keys. The user can input commands to the printer 10 by operating the operation portion 26. For example, by operating the operation portion 26, the user can command the printer 10 to index print the data files stored in the portable memory 60. The display portion 28 is capable of displaying information.

The memory 40 comprises a band memory 42 and another storage area 44. The band memory 42 is a memory for storing at least one band worth of image data (two-level bit-mapped data). The storage area 44 is utilized to store data created while the controller 16 is executing processes.

A simple description will be given of the "band". A method can be conceived in which image data that corresponds to the entirety of the PDL data that has been commanded to be printed by the PC 70 or the like is created, and printing starts only after the whole of this image data has been created. However, in this case a large capacity memory is required to store the entire image data corresponding to all of the PDL data. In order to compress the memory capacity for storing image data, the printer 10 of the present embodiment adopts a method utilizing the concept of a "band" in which the image data is created in small fractions at a time and is sequence printed in that unit. It is possible to divide the print medium into a plurality of bands along the feeding direction of the print medium. In the present embodiment, the bandwidth of one band is set for example on the basis of the range that can be printed by one scan of ink jet heads (which is a range smaller than one page).

Although this will be described in detail later, in the present embodiment the controller 16 first creates image data corresponding to a first band, and writes this image data into the band memory 42. The controller 16 prints the one band worth of image data in accordance with the stored contents of the band memory 42, and then deletes the stored contents of the band memory 42. The controller 16 repeats this process in band units. For example, the controller 16 may create one band worth of image data, delete the band memory after this image data has been printed, then create image data that corresponds to the succeeding band. In this case, the band memory 42 needs only to have one band worth of memory size. However, in the present embodiment, the controller 16 starts creating the second band of image data while the first band worth of image data is being printed. Rapid printing is thus realized. In the case where this process is executed, the band memory 42 requires at least two bands worth of memory size. This is because the creation of the second band of image data is started before the first band worth of image data has been deleted.

The printing mechanism 46 has a mechanism for feeding the print medium, and a mechanism for printing onto the print medium (for example, an ink jet type or laser type image forming mechanism). The printing mechanism 46 prints onto the print medium in accordance with the stored contents of the band memory 42.

### (Configuration of the Controller)

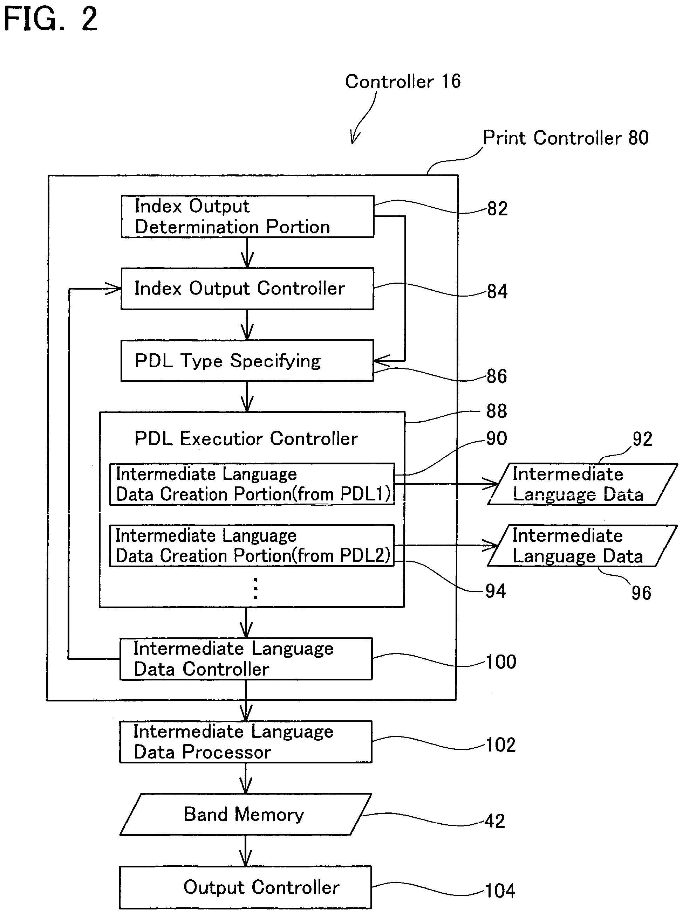

Next, the configuration of the controller 16 will be described in detail utilizing FIG. 2. The controller 16 has a print controller 80. The print controller 80 has an index output determination portion 82, an index output controller 84, a PDL type specifying portion 86, a PDL execution controller 88, and an intermediate language data controller 100. The index output determination portion 82 determines whether a print command input to the printer 10 corresponds to an index output. The index output controller 84 controls the position, size, etc. of the image data that is to undergo index outputting. The index output controller 84 is also capable of commanding the PDL execution controller 88 to convert only the first page of each data file input into the printer 10 into the intermediate language data. The PDL type specifying portion 86 specifies the type of PDL that is describing each data file input into the printer 10. The PDL execution controller 88 commands processes to be executed in accordance with programs corresponding to the type specified by the PDL type specifying portion 86. As a result, for example, an intermediate language data creation portion 90 for creating intermediate language data 92 from the first type of PDL (PDF, for example), and an intermediate language data creation portion 94 for creating intermediate language data 96 from the second type of PDL data (PS, for example) are realized. The intermediate language data controller 100 manages the intermediate language data 92 and 96, and performs a process to activate an intermediate language data processor 102 (to be described).

The controller 16 comprises the intermediate language data processor 102 and an output controller 104. The intermediate language data processor 102 performs a process to create image data having a bit-mapped format from the intermediate language data. The image data created by the intermediate language data processor 102 is written into the band memory 42. The output controller 104 controls the driving of the printing mechanism 46 in accordance with the stored contents of the band memory 42. The image data is thus printed on the print medium.

### (Print Process)

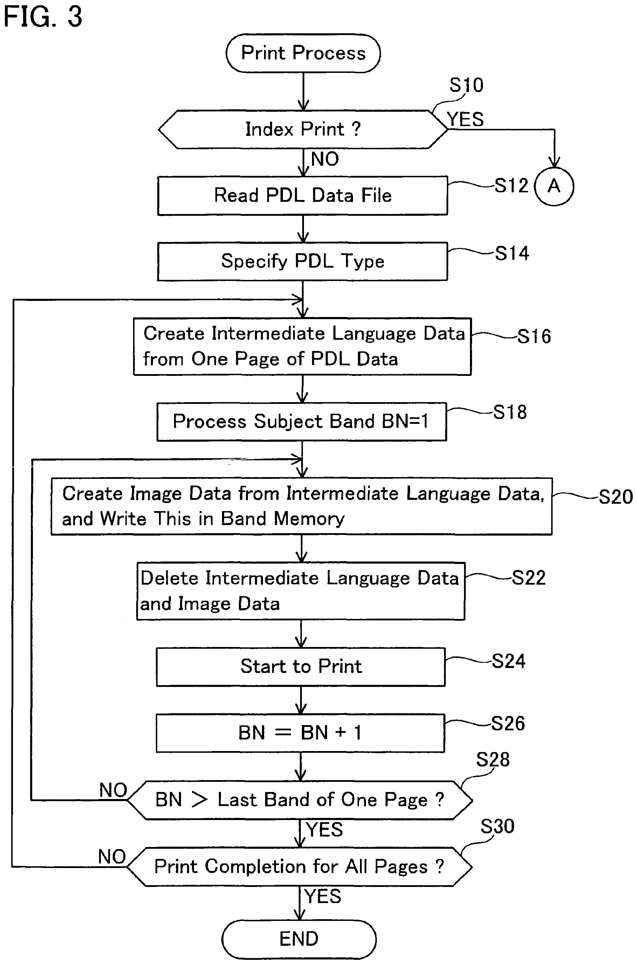

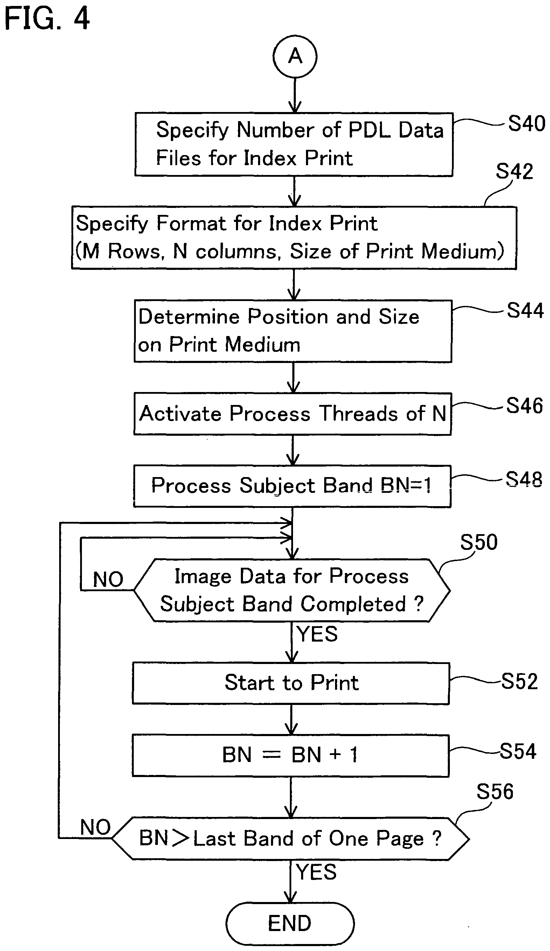

Next, the contents of a print process performed by the controller 16 will be described. The controller 16 performs the print process in accordance with the programs 20, 22, and 24. FIG. 3 and FIG. 4 together show a flow chart of the print process. The print process is started with a print command input from the PC 70 to the network interface 14 as a trigger. Further, in the print process the portable memory 60 is connected with the USB interface 12, and the print process is started with a print instruction operation performed on the operation portion 26 as a trigger.

The controller 16 determines whether the print command (or the print instruction operation) is a command for index printing (S10). For example, in the case where the print command from the PC 70 includes a command showing index printing, the controller 16 determines YES in S10. Further, in the case for example where an operation corresponding to index printing has been performed on the operation portion 26, the controller 16 determines YES in S10. Moreover, the process in the case of NO in S10 (the process from S12 onwards) will be described below using, as an example, the case where the print command from the PC 70 includes a command for normally printing data of the designated data file. Further, the process in the case of YES in S10 (the process from S40 of FIG. 4 onwards) will be described below using, as an example, the case where the portable memory 60 is connected with the USB interface 12 and the operation showing index printing is performed on the operation portion 26.

In the case of NO in S10, the controller 16 reads the data file sent from the PC 70 (S12). This data file is described by a PDL (PDF, for example). As a result, the data file constructs data utilizing the concept of pages. The controller 16 specifies the PDL type describing the data file (S14). Next, in accordance with the program 20 corresponding to the type specified in S 14, the controller 16 creates intermediate language data from one page worth of PDL data (at this stage, the first page of PDL data) constituting the data file (S16). In the process of S16 performed from the second time onwards, the intermediate language data is created from the page of PDL data that is subsequent to the page from the previous time the process of S16 was performed. This routine is repeated until the process has been completed for all the pages constituting the data file.

Next, the controller 16 specifies "1" as the process subject band BN (S18). The controller 16 creates image data from the intermediate language data corresponding to the process subject band (currently "1") (S20). That is, the controller 16 creates the image data from the intermediate language data that is the origin of the image data to be included in the process subject band. The process of S20 is performed in accordance with the image data creation program 22. The controller 16 writes the image data into the band memory 42. One band worth of image data (currently the first band of the first page) is thereby completed. When S20 ends, the controller 16 deletes the intermediate language data that has been converted into the image data (S22). At this point, the intermediate language data corresponding to the bands subsequent to the first band is not deleted.

Next, the controller 16 starts printing in accordance with the stored contents of the band memory 42 created in S20 (S24). Specifically, the controller 16 performs driving control of the printing mechanism 46 in accordance with the stored contents of the band memory 42. When the controller 16 starts the driving control of the printing mechanism 46, the process proceeds to S26. In S26, the controller 16 adds an increment to the process subject band BN. For example, in a case where the processes of S20 through S24 have been performed for the first band (BN = 1), the process subject band BN becomes "2". Next, the controller 16 determines whether the process subject band BN exceeds the last band of the one page (S28). For example, YES is determined in S28 in a case where the last band of one page is "6", and the value of the process subject band BN that has been incremented is "7".

In the case of NO in S28, the controller 16 returns to S20, and creates the image data from the intermediate language data corresponding to the next band. A second band of image data, for example, is thereby stored in the band memory 42 while the first band is being printed. Although this is not shown on the flow chart, when the printing of one band ends, the controller 16 deletes the corresponding band of image data from the band memory 42, and starts printing the next band of image data. When the processes of S20 through S28 have been performed for all the bands of the page, the image data created from one page of PDL data is printed on one page of the print medium.

In the case of YES in S28, the controller 16 determines whether the printing for all the pages constituting the data file has been completed (S30). In the case of NO in S30, the controller 16 performs the process from S16 onwards for the next one page. When the printing for all the pages constituting the data file has been completed, the print process ends.

Next, the contents of the process performed in the case of YES in S10 (i.e. a case in which index printing has been instructed) will be described with reference to FIG. 4. The controller 16 specifies the number of data files to be index printed (S40). For example, the controller 16 can perform index printing based on all the data files stored in the portable memory 60. In this case, in S40, the controller 16 specifies the number of data files stored in the portable memory 60. Further, for example, the controller 16 can perform index printing based on all the data files stored in one folder (for example, a folder designated by the user) that is being stored in the portable memory 60. In this case, in S40, the controller 16 specifies the number of data files stored in the folder.

Next, the controller 16 specifies the format for index printing (S42). When the user commands index printing, it is possible to designate the number of pieces of image data to be aligned in a lengthwise direction (M rows) and the number of pieces of image data to be aligned in a crosswise direction (N columns) in a matrix format, and the size of the print medium (for example, A4 size). The controller 16 performs the process of S42 by specifying these number values. Next, the controller 16 determines the position of the image data corresponding to the data files based on the number of data files specified in S40 and the number values specified in S42 (M, N, and the size of the print medium) (S44). The contents of this process will be described in detail below.

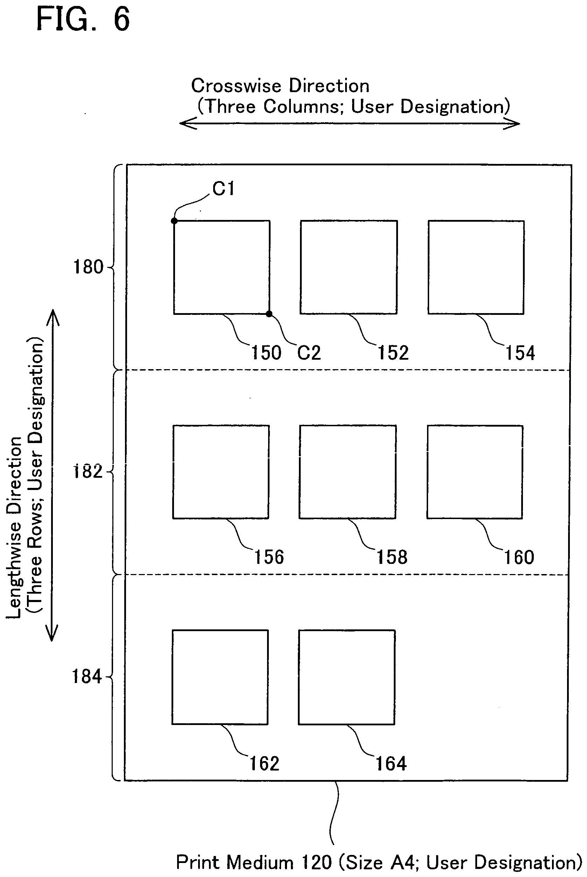

FIG. 6 shows one page of a print medium 120 that is undergoing index printing. In the example of FIG. 6, there are eight data files to undergo index printing, and the user has designated three rows, three columns, and A4 size. One piece of image data is created from one data file, and is printed on the print medium 120. In the example of FIG. 6, eight pieces of image data corresponding to eight data files 150 to 164 are disposed in a three row, three column matrix shape. Each piece of image data is disposed with a distance with respect to the other pieces of image data. In the case of the example of FIG. 6, three pieces of image data to be disposed on the same row (for example, data files 150, 152, and 154) are aligned equidistantly. Further, three pieces of image data to be disposed in the same column (for example, data files 150, 156, and 162) are aligned equidistantly. Moreover, the above eight data files 150 to 164 are described by different PDLs. For example, the data files 150 to 156 are described by PDF, while the data files 158 to 164 are described by PS.

The program 24 (see FIG. 1) stores coordinates at which each piece of image data is to be disposed within the A4 size, in the three row by three column pattern. The controller 16 specifies, in accordance with the stored contents, the coordinates at which each piece of image data created from the data files 150 to 164 is to be disposed. For example, the coordinates C1 and C2 are specified for the data file 150. In the present embodiment, a method that utilizes the two vertex coordinates C1 and C2 present on one diagonal line of rectangular image data has been adopted. Both the position and the size of the image data can thereby be expressed. The controller 16 specifies the coordinates for each of the other data files 152 to 164 in the same manner as for the data file 150. Moreover, the program 24 does not store only the A4 size, three by three matrix, but also stores coordinates for other patterns in which image data can be disposed (for example, a B4 size, ten rows by five columns matrix, etc.). The controller 16 is also capable of specifying the coordinates for other patterns in which the image data created from the data files is to be disposed.

Next, the controller 16 activates the same number of process threads as "N" specified in S42 of FIG. 4 (S46). That is, the controller 16 activates the same number of process threads as the number of pieces of image data to be aligned in the crosswise direction. For example, in the case of the example of FIG. 6, the controller 16 activates three process threads. The contents of the process thread will be described in detail below.

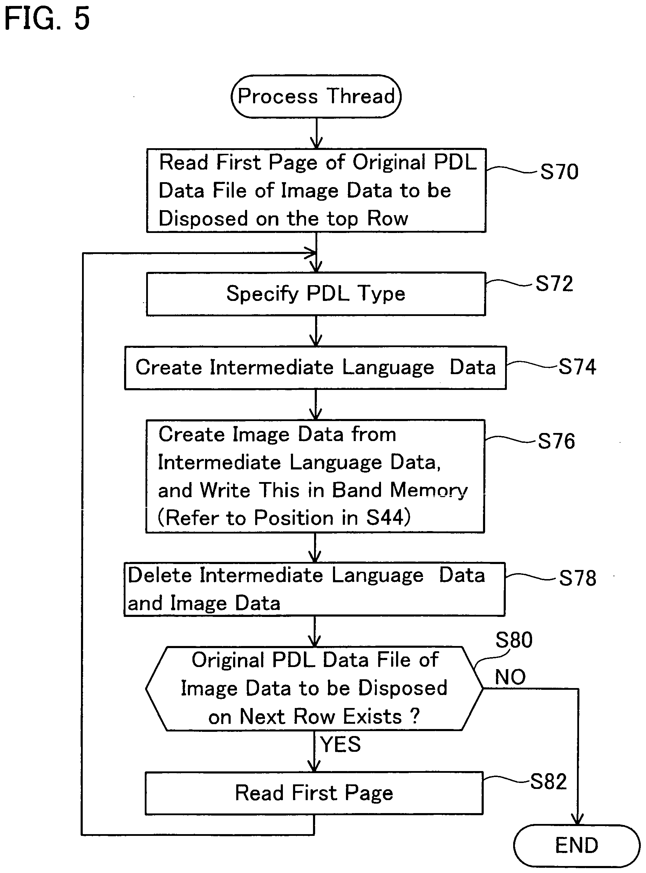

FIG. 5 shows a flow chart of one process thread. A plurality of process threads activated in S46 of FIG. 4 is performed in parallel. A different piece of image data to be disposed on the topmost row of the print medium is created for each of the plurality of process threads. For example, in the case of the example of FIG. 6, in each of the three process threads, one piece of image data to be disposed on a topmost row 180 is created respectively from the different data files 150, 152, and 154. Next, in each of the three process threads, different one piece of image data to be disposed on a second row 182 is created respectively. That is, in each of the three process threads, one piece of image data is created from the different data files 156, 158, and 160. This process is repeated until the image data is created that is to be disposed on the bottommost row (the third row 184 in the example of FIG. 6).

In the present embodiment, a method has been adopted in which one process thread creates, in sequence, a plurality of pieces of image data that are be disposed in the same column. For example, in the process thread that creates one piece of image data from the data file 150, one piece of image data is then created from the data file 156, and subsequently one piece of image data is created from the data file 162. That is, the three pieces of image data that are to be disposed on the leftmost line columnwise are created in sequence in this process thread. Below, the contents of the flow chart of FIG. 5 will be described using this process thread (the process thread corresponding to the leftmost line) as an example. Moreover, only two pieces of image data, namely data files 154 and 160, are disposed in the rightmost line in the example of FIG. 6. As a result, only two pieces of image data are created in the process thread corresponding to the rightmost line.

The controller 16 reads the first page of PDL data of the original data file 150 of the image data to be disposed on the uppermost row 180 (S70). Next, the controller 16 specifies the PDL type described in the data file 150 (S72). Next, the controller 16 creates intermediate language data from the first page of PDL data of the data file 150 in accordance with the program 20 corresponding to the type specified in S72 (S74).

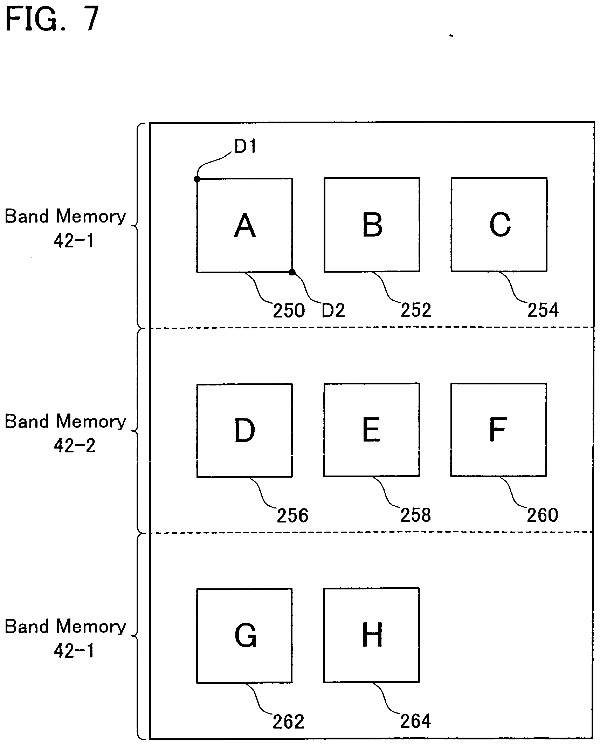

Next, the controller 16 creates one piece of image data from the intermediate language data created in S74 (S76). The process of S76 is executed in accordance with the image data creation program 22. The controller 16 writes the image data into the band memory 42. FIG. 7 is a figure for describing how the image data is written into the band memory 42. FIG. 7 is created in accordance with the example of FIG. 6. As described above, the band memory 42 has at least two bands worth of memory size. In FIG. 7, an area for storing one band of image data is shown by the number 42 - 1, and an area for storing the other band of image data is shown by the number 42 - 2. Moreover, the print medium 120 of FIG. 6 is divided into three bands in the example of FIG. 7. It should be noted that the print medium may be divided into more bands.

The controller 16 writes image data 250 created from the first page of the data file 150 into the band memory 42 - 1. At this occasion, for the data file 150, the controller 16 writes the image data 250 into the position corresponding to the coordinates C1 and C2 specified in S44 of FIG. 4. In the case of the examples of FIG. 6 and FIG. 7, the image data 250 is written into the band memory 42 - 1 such that the image data 250 is disposed at an upper left vertex of the position D1 corresponding to the coordinate C1 and the image data 250 is disposed at a lower right vertex of the position D2 corresponding to the coordinate C2. In the same manner as this process thread, image data 252 is written into the position corresponding to the coordinates specified for the data file 152 in the process thread for creating image data from the data file 152. Further, in the process thread for creating image data from the data file 154, image data 254 is written into the position corresponding to the coordinates specified for the data file 154. The three pieces of image data 250, 252, and 254 in the band memory 42 - 1 maintain the positional relationship specified in S44 of FIG. 4 for the three data files 150, 152, and 154. In other words, the relative positional relationship of the three pieces of image data 250, 252, and 254 in the band memory 42 - 1 is identical with the relative positional relationship of the three data files 150, 152, and 154 specified in S44 of FIG. 4.

Moreover, intermediate language data is not created for the data files 156 and 162 at the point where the process of S76 is performed for the data file 150. That is, before creating all of the intermediate language data corresponding to one page of the print medium 120, the controller 16 performs the process of creating one piece of image data from the first page of the data file 150 and writing this image data into the band memory 42. In the present embodiment, the eight pieces of image data 250 to 264 created from the respective data files 150 to 164 are printed onto mutually independent areas (i.e. the image data does not overlap). As a result, when intermediate language data is created from one data file (for example, 150), the process of creating image data and writing the image data into the band memory 42 can be started without waiting for the intermediate language data to be created from another data file (for example, 156).

In the example of FIG. 7, the first band of image data is completed when the three pieces of image data 250, 252, 254 are written into the band memory 42 - 1. The controller 16 simultaneously activates a plurality of process threads in S46 of FIG. 4, and specifies "1" as the process subject band BN (S48). Next, the controller 16 monitors whether the process subject band (currently "1 ") has been completed (S50). In the example of FIG. 7, when the three pieces of image data 250, 252, and 254 have been written into the band memory 42 - 1, the controller 16 determines YES in S50. In this case, the controller 16 starts printing the three pieces of image data 250, 252, and 254 in accordance with the stored contents of the band memory 42 - 1 (S52). When the controller 16 starts printing, the process proceeds to S54. In S54, the controller 16 adds an increment to the process subject band BN. Next, the controller 16 determines whether the process subject band BN exceeds the last band of one page (S56). In the case of NO in S56, the controller 16 returns to S50, and monitors whether the process for creating image data corresponding to the process subject band data (currently "2") has been completed.

Moreover, at the stage of starting printing for the first band (the stage of starting to print the image data 250, 252, and 254), intermediate language data is not created from all the other data files 156 to 164. That is, in the present embodiment, since the band memory 42 - 1 of at least the first band has been completed, printing of the first band can be started before all of the intermediate language data corresponding to one page of the print medium 120 has been created.

Alternatively, in the process thread, the process proceeds to S78 when the image data has been created in S76 of FIG. 5. In S78, the controller 16 deletes the intermediate language data converted into image data in S76, as well as the image data (S78). Next, the controller 16 determines whether an original data file of image data to be disposed on the next row exists (S80). For example, in the case where the processes of S72 to S78 are performed for the data file 150 of the example of FIG. 6, the original data file 156 of the image data 256 to be disposed on the second row 182 exists. In this case, the controller 16 determines YES in S80, and reads the first page of PDL data of the data file 156 (S82). Next, the controller 16 performs the processes of S72 to S78 for the data file 156. As shown in FIG. 7, the one piece of image data 256 corresponding to the first page of the data file 156 is thereby written into the band memory 42 - 2. In the same manner as in this process thread, image data 258 and 260 corresponding to the first pages of the data files 158 and 160 are written into the band memory 42 - 2 in the other two process threads. The second band of image data is thereby completed.

When the second band data has been completed, the controller 16 determines YES in S50 of FIG. 4. In this case, the controller 16 starts printing the second band data onto the print medium 120 in accordance with the band memory 42 - 2 on a condition that the printing of the first band data has been completed. Moreover, although this is not shown in the flow chart, the controller 16 clears the band memory 42 - 1 when the printing of the first band data ends. It thus becomes possible to write the subsequent band data (the image data 262 and 264 corresponding thereof in the example of FIG. 7) into the band memory 42 - 1.

In the same manner as for the first band and the second band, the controller 16 creates third band (a final band in the present embodiment) data 262 and 264 and prints it. In this case, the controller 16 determines YES in S56, and ends the print process. The one page of print medium 120 that has the eight pieces of image data 250 to 264 printed thereon is thus completed.

For each of the plurality of data files 150 to 164 described by different PDLs, the printer 10 of the present embodiment converts the first pages of PDL data of the data files into the same intermediate language. As a result, it is possible to utilize the program 22 for creating the image data and writing the image data into the band memory 42 in common for a plurality of types of PDL. Since it is possible to create the image data from the intermediate language data in accordance with the common program 22 and write this image data into the band memory 42, it is possible to write the plurality of pieces of image data 250 to 264 created from different PDLs into the same band memory 42. As a result, it is possible to print the plurality of pieces of image data 250 to 264 created from different PDLs onto the one page of print medium 120. That is, the printer 10 of the present embodiment is capable of index printing the plurality of pieces of image data 250 to 264 created from different PDLs.

Further, the printer 10 performs, in parallel, the same number of process threads as the number of pieces of image data that are to be aligned in the crosswise direction. In each of the process threads, the first page of PDL data of the data file is initially converted into the intermediate language data, then the intermediate language data is converted into the image data, and the image data is consequently written into the band memory 42. That is, a series of processes are performed in which, with one piece of PDL data (one data file) as being one unit to carry out the processes upon; whereas the PDL data is converted into intermediate language data, the aforesaid intermediate language data is converted into image data, and the aforesaid image data is written into the band memory 42. As a result, the printer 10 can start writing the image data into the band memory 42 before the intermediate language data has been created from the entirety of the data files 150 to 164. A process that is the antithesis of this process can be considered, in which the creation of the image data is started only after waiting for the intermediate language data to be created from the entirety of the data files 150 to 164. However, in this process, the intermediate language data created from all the data files 150 to 164 must be stored, and consequently the load on the memory is large. It is also possible to adopt, as another method, a method in which, before the intermediate language data has been created from the entirety of the data files 150 to 164, image data is created from intermediate language data that has been created and this image data is compressed. However, even if this method is adopted, it is necessary to store the compressed data until the intermediate language data has been created from the entirety of the data files 150 to 164, and consequently the load on the memory is still large. By contrast, since the printer 10 of the present embodiment performs the above series of processes with one piece of PDL data as a unit, it is possible, when intermediate language data has been created for that PDL data, to convert that intermediate language data into image data, to write the image data into the band memory 42, and to delete the intermediate language data and the image data, thereby realizing the printer 10 capable of performing the process with a small load on the memory.

### (Second Embodiment)

The description below will focus mainly on the features differing from the first embodiment. In the present embodiment, a page memory 142 is utilized instead of the band memory 42. The page memory 142 is a memory for storing image data corresponding to at least one page worth of print medium.

In the present embodiment, the contents of the processes performed by the controller 16 differ from those of the first embodiment. Specifically, the features as below differ therefrom. The controller 16 does not create the image data in band units. As a result, the processes of S18, S26, and S28 of FIG. 3 are not performed. Further, the controller 16 writes the image data into the page memory 142 in S20 of FIG. 3. The controller 16 starts printing in accordance with the stored contents of the page memory 142 in S24 of FIG. 3.

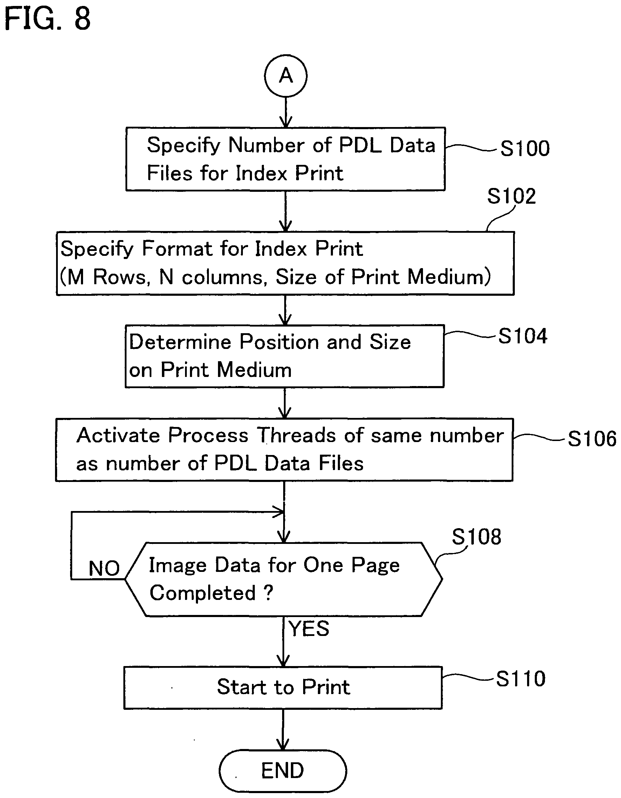

Further, the process after YES has been determined in S10 of FIG. 3 differs from the first embodiment. FIG. 8 shows a flow chart of the process after YES has been determined in S10 of FIG. 3. S100 through S104 are the same as S40 through S44 of FIG. 4. The controller 16 activates the same number of process threads as the number of data files for index printing (S106). For example, in the case of the example of FIG. 6, the controller 16 activates eight process threads.

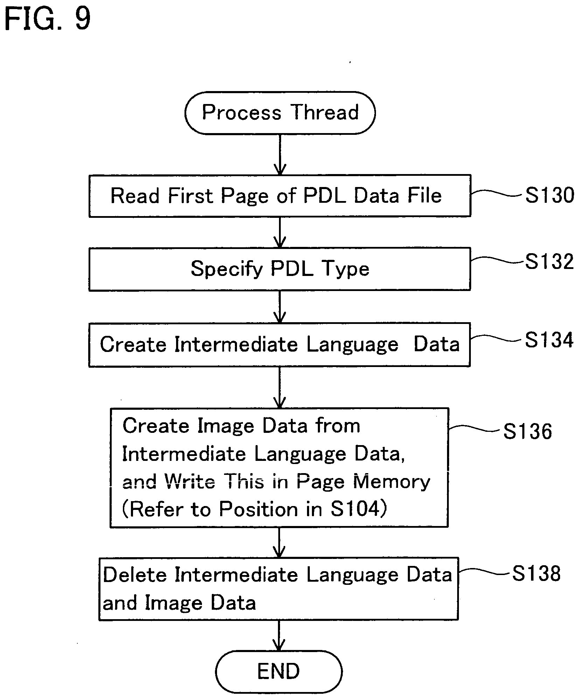

FIG. 9 shows a flow chart of a process thread of the present embodiment. A plurality of process threads activated in S106 of FIG. 8 are performed in parallel. One piece of image data is created in each of the plurality of process threads. For example, in the case of the example of FIG. 6, one piece of image data is created from the respective one of data files 150 to 164 in each of the eight process threads. Below, the contents of the flow chart of FIG. 9 will be described using the process thread for creating one piece of image data from the data file 150 as an example.

S130 through S134 are the same as S70 through S74 of FIG. 5. The controller 16 creates one piece of image data from the intermediate language data created in S134 (S136). The controller 16 writes the image data into the page memory 142. At this juncture, the controller 16 writes the image data 250 (see FIG. 7) into the position corresponding to the coordinates C1 and C2 specified in S104 of FIG. 8 for the data file 150. Next, the controller 16 deletes the intermediate language data created in S134 as well as the image data (S138). The process thread ends when one piece of image data has been created from the data file 150 and written into the page memory 142. The image data 252 to 264 created from the other data files 152 to 164 are likewise written into the page memory 142 in the same manner as in this process thread.

When a plurality of process threads have been activated simultaneously in S 106 of FIG. 8, the controller 16 monitors whether the image data of the page memory 142 has been completed (S108). In the examples of FIG. 6 and FIG. 7, the controller 16 determines YES in S108 when all of the image data 250 to 264 has been written into the page memory 142. In this case, the controller 16 starts printing the image data 250 to 264 in accordance with the stored contents of the page memory 142 (S110). The one page of print medium 120 on which the eight pieces of image data 250 to 264 are printed is thereby completed. When S110 ends, the print process ends.

According to the present embodiment, as well, it is possible to perform index printing of a plurality of pieces of image data 250 to 264 created from different PDLs. Further, since the series of processes can be performed with one piece of PDL data (one data file) as a unit, it is possible to perform the processes with a small load on the memory.

Variants of the above embodiments will be given below.
(1) In the above embodiments, the controller 16 may activate only one process thread. In this case, the process thread repeats the creation of one piece of image data from one data file. In this example, as well, it is possible to perform the series of processes with one piece of PDL data (one data file) as a unit.
(2) The technique of the above embodiments can be applied not only in the case of creating image data for printing, but also in the case of creating multi gradation image data for display.
(3) In examples which are not part of the claimed invention, image data need not be created from only the first page for one data file. That is, in the case for example where two data files described by different PDLs are present, a plurality of pieces of image data (four, for example) may be created from a plurality of pages (for example, four pages) of PDL data that constitute one data file, a plurality of pieces of image data (three, for example) may be created from a plurality of pages (for example, three pages) of PDL data that constitute the other data file, and all the image data (for example, seven pieces of image data) may be printed onto one page of print medium. Further, for one data file, image data may be created from a plurality of pages within the data file.

## Claims

1. An image output apparatus (10) configured to create one piece of image data in a bit-mapped format from PDL data described by a page description language, and output a plurality of pieces of image data (250 to 264) as one page of an output image, the image output apparatus (10) comprising:
a memory (42, 142); a data file input device (12, 14) configured to input a plurality of data files (150 to 164), wherein :
when the plurality of data files (150 to 164) includes a first data file including a plurality of pages of PDL data being described by a first page description language, and a second data file including a plurality of pages of PDL data being described by a second page description language which is different from the first page description language,
a position determination device (84) is configured to determine, for each of the plurality of data files (150 to 164) including the first data file and the second data file, with respect to one page of PDL data included in the data file (150 to 164), a position (C1, C2) in which one piece of image data (250 to 264) corresponding to the PDL data is to be disposed within the output image;
an intermediate language data creation device (88) is configured to create a plurality of pieces of intermediate language data (92, 96) described by the same intermediate language from the plurality of data files (150 to 164) including the first data file and the second data file, by creating, for each of the plurality data files (150 to 164) including the first data file and the second data file, with respect to one page of PDL data included in the data file (150 to 164), one piece of the intermediate language data (92, 96) described by the intermediate language from only the first page of PDL data of each respective data file;
an image data creation device (102) is configured to create a plurality of pieces of image data (250 to 264) within the memory (42, 142) from the plurality of pieces of the intermediate language data (92, 96), by creating, for each of the plurality of pieces of the intermediate language data (92, 96), one piece of the image data (250 to 264) from the piece of intermediate language data (92, 96), and by writing the one piece of image data (250 to 264) in a position (Dl, D2) within the memory (42, 142) corresponding to the position (C1, C2) determined by the position determination device (84) with respect to the original PDL data of the one piece of image data (250 to 264); and
an image data output device (104, 46) is configured to output the plurality of pieces of image data (250 to 264) as one page of the output image in accordance with the stored contents of the memory (42, 142).

2. The image output apparatus (10) as in claim 1, wherein
the intermediate language data creation device (88) and the image data creation device (102) are configured to perform a process in a unit of one piece of the PDL data,
the process includes:
creating one piece of the intermediate language data (92, 96) from the one piece of PDL data;
creating one piece of the image data (250 to 264) from the one piece of intermediate language data (92, 96);
writing the one piece of image data (250 to 264) in the position (Dl, D2) within the memory (42, 142) corresponding to the position (C1, C2) determined by the position determination device (84) with respect to the original PDL data of the one piece of image data (250 to 264); and
deleting the one piece of intermediate language data (92, 96).

3. The image output apparatus (10) as in claim 1 or 2, wherein
if predetermined intermediate language data (92, 96) is created from the PDL data included in a data file of the plurality of data files before all intermediate language data (92, 96) corresponding to one page of the output image has been created, the image data creation device creates one piece of the image data (250 to 264) from the predetermined intermediate language data (92, 96), and starts to write the one piece of image data (250 to 264) in the position within the memory corresponding to the position determined by the position determination device with respect to the original PDL data of the one piece of image data (250 to 264).

4. The image output apparatus (10) as in any one of claims 1 to 3, wherein
the intermediate language data creation device (88) is configured to perform a plurality of first processes in parallel, a number of the plurality of first processes being identical to a number of the plurality of pieces of image data (250 to 264) to be output as one page of the output image, and
each of the first processes includes creating the intermediate language data (92, 96) from the original PDL data of different one piece of image data (250 to 264).

5. The image output apparatus (10) as in claim 4, wherein
the memory (42, 142) is a page memory (142) configured to store the image data (250 to 264) corresponding to at least one page of the output image,
the image data creation device (102) is configured to perform a plurality of second processes in parallel, a number of the plurality of second processes being identical to a number of the plurality of pieces of image data (250 to 264) to be output as one page of the output image, and
each of the second processes includes:
creating one piece of the image data (250 to 264) from the intermediate language data (92, 96) created in different one first process among the plurality of first processes;
writing the one piece of image data (250 to 264) in the position (D1. D2) within the memory (142) corresponding to the position (C1, C2) determined by the position determination device (84) with respect to the original PDL data of the one piece of image data (250 to 264); and
deleting the intermediate language data (92, 96) created in the different one first process.

6. The image output apparatus (10) as in claim 5, wherein
the intermediate language data creation device (88) and the image data creation device (102) are configured to perform a plurality of process threads in parallel, a number of the plurality of process threads being identical to a number of the plurality of pieces of the image data (250 to 264) to be output as one page of the output image, and
each of the process threads includes the first process and the second process.

7. The image output apparatus (10) as in any one of claims 1 to 3, wherein
the image output apparatus (10) is configured to output the plurality of pieces of image data (250 to 264) which is disposed in a matrix pattern of M rows and N columns as one page of the output image,
in a case where N is an integer greater than 1, the intermediate language data creation device (88) is configured to perform first processes in parallel, a number of the first processes being identical to N, and
each of the N first processes includes creating the intermediate language data (92, 96) from the original PDL data of different one piece of the image data (250 to 264) among N pieces of the image data (250 to 264) which are to be disposed on the same row (180, 182, 184).

8. The image output apparatus (10) as in claim 7, wherein
in a case where M is an integer greater than 1, each of the N first processes includes:
(1) creating the intermediate language data (92, 96) from the original PDL data of the image data (250 to 264) to be disposed on a first row (180);
(2) creating the intermediate language data (92, 96) from the original PDL data of the image data (250 to 264) to be disposed on a second row (182) which is subsequent to the first row (180); and
(3) determining whether the second row (182) is an M-th row,if the determination of (3) is a positive determination, the first process ends, and
if the determination of (3) is a negative determination, the process of (2) is performed by utilizing the second row (182) in (3) as the first row (180) of (2).

9. The image output apparatus (10) as in claim 7 or 8, wherein
the memory (42, 142) is a band memory (42) configured to store the image data (250 to 264) corresponding to at least one band of the output image,
the image data creation device (102) is configured to perform second processes in parallel, a number of the second processes being identical to N, and each of the N second processes includes:
creating one piece of the image data (250 to 264) from the intermediate language data (92, 96) created in different one first process among the N first processes,
writing the one piece of the image data (250 to 264) in the position (Dl, D2) within the memory (42) corresponding to the position (C1, C2) determined by the position determination device (82) with respect to the original PDL data of the one piece of the image data (250 to 264); and
deleting the intermediate language data (92, 96) created in the different one first process.

10. The image output apparatus (10) as in claim 9, wherein
the intermediate language data creation device (88) and the image data creation device (102) are configured to perform process threads in parallel, a number of the process threads being identical to N, and
each of the N process threads includes the first process and the second process.

11. A computer program (20, 22, 24) for creating one piece of image data in a bit-mapped format from PDL data described by a page description language and outputting a plurality of pieces of image data (250 to 264) as one page of an output image, the computer program (20, 22, 24) including instructions for ordering a computer to perform:
inputting a plurality of data files (150 to 164), wherein the plurality of data files (150 to 164), includes a first data file including a plurality of pages of PDL data being described by a first page description language and a second data file including a plurality of pages of PDL data being described by a second page description language which is different from the first page description language;
determining, for each of the plurality of data files (150 to 164) including the first data file and the second data file, with respect to one page of PDL data included in the data file (150 to 164), a position (C1, C2) in which one piece of image data (250 to 264) corresponding to the one page of PDL data is to be disposed within the output image;
creating a plurality of pieces of intermediate language data (92, 96) described by the same intermediate language from the plurality of data files (150 to 164) including the first data file and the second data file, by creating, for each of the plurality of data files (150 to 164) including the first data file and the second data file, with respect to one page of PDL data included in the data file (150 to 164), one piece of the intermediate language data (92, 96) described by the intermediate language from only the first page of PDL data of each respective data file;
creating a plurality of pieces of image data (250 to 264) within a memory (42, 142) from the plurality of pieces of the intermediate language data (92, 96), by creating, for each of the plurality of pieces of the intermediate language data (92, 96), one piece of the image data (250 to 264) from the piece of intermediate language data (92, 96), and by writing the one piece of image data (250 to 264) in a position (D1, D2) within the memory (42, 142) corresponding to the determined position (C1, C2) with respect to the original PDL data of the one piece of image data (250 to 264); and
outputting the plurality of pieces of image data (250 to 264) as one page of the output image in accordance with the stored contents of the memory (42, 142).

## Patentansprüche

1. Bildabgabegerät (10), das dazu konfiguriert ist, ein Bilddatenstück im Rasterformat aus PDL-Daten zu erzeugen, die durch eine Seitenbeschreibungssprache beschrieben sind, und viele Bilddatenstücke (250 bis 264) als eine einzige Seite eines Abgabebilds abzugeben, wobei das Bildabgabegerät (10) Folgendes aufweist:
einen Speicher (42, 142);
eine Datendateieingabevorrichtung (12, 14), die dazu konfiguriert ist, viele Datendateien (150 bis 164) einzugeben, wobei: wenn die vielen Datendateien (150 bis 164) eine erste Datendatei einschließlich vielen Seiten von PDL-Daten, die durch eine erste Seitenbeschreibungssprache beschrieben sind, und eine zweite Datendatei einschließlich vielen Seiten von PDL-Daten enthalten, die durch eine zweite Seitenbeschreibungssprache beschrieben sind, die sich von der ersten Seitenbeschreibungssprache unterscheidet,
eine Positionsbestimmungsvorrichtung (84) dazu konfiguriert ist, für die vielen Datendateien (150 bis 164), die die erste Datendatei und die zweite Datendatei enthalten, hinsichtlich einer einzigen Seite von PDL-Daten, die in der Datendatei (150 bis 164) enthalten sind, jeweils eine Position (C1, C2) zu bestimmen, an der ein einziges Bilddatenstück (250 bis 264) entsprechend den PDL-Daten innerhalb des Abgabebilds anzuordnen ist;
eine Zwischensprachendatenerzeugungsvorrichtung (88) dazu konfiguriert ist, viele Zwischensprachdatenstücke (92, 96) zu erzeugen, die durch dieselbe Zwischensprache beschrieben sind, und zwar aus den vielen Datendateien (150 bis 164), die die erste Datendatei und die zweite Datendatei enthalten, indem für die vielen Datendateien (150 bis 164), die die erste Datendatei und die zweite Datendatei enthalten, jeweils hinsichtlich einer einzigen Seite von PDL-Daten, die in der Datendatei (150 bis 164) enthalten sind, ein Zwischensprachdatenstück (92, 96) erzeugt wird, das durch die Zwischensprache beschrieben ist, und zwar nur von der ersten Seite von PDL-Daten der jeweiligen Datendatei;
eine Bilddatenerzeugungsvorrichtung (102) dazu konfiguriert ist, viele Bilddatenstücke (250 bis 264) innerhalb des Speichers (42, 142) aus den vielen Zwischensprachdatenstücken (92, 96) zu erzeugen, indem jeweils für die vielen Zwischensprachdatenstücke (92, 96) ein einziges Bilddatenstück (250 bis 264) aus dem Zwischensprachdatenstück (92, 96) erzeugt wird und indem das einzige Bilddatenstück (250 bis 264) an einer Position (D1, D2) innerhalb des Speichers (42, 142) entsprechend der Position (C1, C2) geschrieben wird, die durch die Positionsbestimmungsvorrichtung (84) bestimmt ist, und zwar hinsichtlich den ursprünglichen PDL-Daten des einzigen Bilddatenstücks (250 bis 264); und
eine Bilddatenabgabevorrichtung (104, 46) dazu konfiguriert ist, die vielen Bilddatenstücke (250 bis 264) als eine einzige Seite des Abgabebilds gemäß den gespeicherten Inhalten des Speichers (42, 142) abzugeben.

2. Bildabgabegerät (10) gemäß Anspruch 1, wobei
die Zwischensprachdatenerzeugungsvorrichtung (88) und die Bilddatenerzeugungsvorrichtung (102) dazu konfiguriert sind, einen Prozess in einer Einheit eines einzigen PDL-Datenstücks durchzuführen,
wobei der Prozess Folgendes beinhaltet:
Erzeugen von einem einzigen Zwischensprachdatenstück (92, 96) aus dem einzigen PDL-Datenstück;
Erzeugen von einem einzigen Bilddatenstück (250 bis 264) aus dem einzigen Zwischensprachdatenstück (92, 96);
Schreiben des einzigen Bilddatenstücks (250 bis 264) an der Position (D1, D2) innerhalb des Speichers (42, 142) entsprechend der Position (C1, C2), die durch die Positionsbestimmungsvorrichtung (84) bestimmt ist, und zwar hinsichtlich den ursprünglichen PDL-Daten des einzigen Bilddatenstücks (250 bis 264); und
Löschen des einzigen Zwischensprachdatenstücks (92, 96).

3. Bildabgabegerät (10) gemäß Anspruch 1 oder 2, wobei,
falls vorbestimmte Zwischensprachdaten (92, 96) aus den PDL-Daten erzeugt werden, die in einer Datendatei der vielen Datendateien enthalten sind, bevor alle Zwischensprachdaten (92, 96) entsprechend der einzigen Seite des Abgabebilds erzeugt wurden, die Bilddatenerzeugungsvorrichtung ein einziges Bilddatenstück (250 bis 264) aus den vorbestimmten Zwischensprachdaten (92, 96) erzeugt und ein Schreiben des einzigen Bilddatenstücks (250 bis 264) an der Position innerhalb des Speichers entsprechend der Position startet, die durch die Positionsbestimmungsvorrichtung bestimmt ist, und zwar hinsichtlich den ursprünglichen PDL-Daten des einzigen Bilddatenstücks (250 bis 264).

4. Bildabgabegerät (10) gemäß einem der Ansprüche 1 bis 3, wobei
die Zwischensprachdatenerzeugungsvorrichtung (88) dazu konfiguriert ist, viele erste Prozesse parallel durchzuführen, wobei eine Anzahl der vielen ersten Prozesse identisch einer Anzahl der vielen Bilddatenstücke (250 bis 264) ist, die als eine einzige Seite des Abgabebilds abzugeben sind, und
die ersten Prozesse jeweils ein Erzeugen der Zwischensprachdaten (92, 96) aus den ursprünglichen PDL-Daten aus verschiedenen, einzigen Bilddatenstücken (250 bis 264) beinhalten.

5. Bildabgabegerät (10) gemäß Anspruch 4, wobei
der Speicher (42, 142) ein Seitenspeicher (142) ist, der dazu konfiguriert ist, die Bilddaten (250 bis 264) zumindest entsprechend einer einzigen Seite des Abgabebilds zu speichern,
die Bilddatenerzeugungsvorrichtung (102) dazu konfiguriert ist, viele zweite Prozesse parallel durchzuführen, wobei eine Anzahl der vielen zweiten Prozesse identisch einer Anzahl der vielen Bilddatenstücke (250 bis 264) ist, die als eine einzige Seite des Abgabebilds abzugeben sind, und
die zweiten Prozesse jeweils Folgendes aufweisen:
Erzeugen von einem einzigen Bilddatenstück (250 bis 264) aus den Zwischensprachdaten (92, 96), die in einem einzigen ersten Prozess aus den vielen ersten Prozessen erzeugt werden;
Schreiben des einzigen Bilddatenstücks (250 bis 264) an der Position (D1, D2) innerhalb des Speichers (142) entsprechend der Position (C1, C2), die durch die Positionsbestimmungsvorrichtung (84) bestimmt ist, und zwar hinsichtlich den ursprünglichen PDL-Daten des einzigen Bilddatenstücks (250 bis 264); und
Löschen der Zwischensprachdaten (92, 96), die in dem verschiedenen, einzigen ersten Prozess erzeugt werden.

6. Bildabgabegerät (10) gemäß Anspruch 5, wobei
die Zwischensprachdatenerzeugungsvorrichtung (88) und die Bilddatenerzeugungsvorrichtung (102) dazu konfiguriert sind, viele Prozessthreads parallel durchzuführen, wobei eine Anzahl der vielen Prozessthreads identisch einer Anzahl der vielen Bilddatenstücke (250 bis 264) ist, die als eine einzige Seite des Abgabebilds abzugeben sind, und
die Prozessthreads jeweils den ersten Prozess und den zweiten Prozess enthalten.

7. Bildabgabegerät (10) gemäß einem der Ansprüche 1 bis 3, wobei
das Bildabgabegerät (10) dazu konfiguriert ist, die vielen Bilddatenstücke (250 bis 264), die in einem Matrixmuster von M Zeilen und N Spalten angeordnet sind, als eine einzige Seite des Abgabebilds abzugeben,
falls N eine ganze Zahl ist, die größer als 1 ist, ist die Zwischensprachdatenerzeugungsvorrichtung (88) dazu konfiguriert, erste Prozesse parallel durchzuführen, wobei eine Anzahl der ersten Prozesse identisch N ist, und
die N ersten Prozesse jeweils ein Erzeugen der Zwischensprachdaten (92, 96) aus den ursprünglichen PDL-Daten von einem einzigen, verschiedenen Bilddatenstück (250 bis 264) aus den N Bilddatenstücken (250 bis 264) beinhalten, die in derselben Zeile (180, 182, 184) anzuordnen sind.

8. Bildabgabegerät (10) gemäß Anspruch 7, wobei,
falls M eine ganze Zahl ist, die größer ist als 1, die N ersten Prozesse jeweils Folgendes aufweisen:
(1) Erzeugen der Zwischensprachdaten (92, 96) aus den ursprünglichen PDL-Daten der Bilddaten (250 bis 264), die in einer ersten Zeile (180) anzuordnen sind;
(2) Erzeugen der Zwischensprachdaten (92, 96) aus den ursprünglichen PDL-Daten der Bilddaten (250 bis 264), die in einer zweiten Zeile (182) anzuordnen sind, die der ersten Zeilen (180) folgt; und
(3) Bestimmen, ob die zweite Zeile (182) eine M-te Zeile ist, falls die Bestimmung in (3) eine positive Bestimmung ist, endet der erste Prozess, und falls die Bestimmung in (3) eine negative Bestimmung ist, wird der Prozess in (2) durchgeführt, indem die zweite Zeile (182) in (3) als die erste Zeile (180) in (2) verwendet wird.

9. Bildabgabegerät (10) gemäß Anspruch 7 oder 8, wobei
der Speicher (42, 142) ein Bandspeicher (42) ist, der dazu konfiguriert ist, die Bilddaten (250 bis 264) zumindest entsprechend einem einzigen Band des Abgabebilds zu speichern,
die Bilddatenerzeugungsvorrichtung (102) dazu konfiguriert ist, zweite Prozesse parallel durchzuführen, wobei eine Anzahl der zweiten Prozesse identisch N ist, und wobei die N zweiten Prozesse jeweils Folgendes aufweisen:
Erzeugen von einem einzigen Bilddatenstück (250 bis 264) aus den Zwischensprachdaten (92, 96), die in einem einzigen, verschiedenen ersten Prozess von den N ersten Prozessen erzeugt werden,
Schreiben des einzigen Bilddatenstücks (250 bis 264) an der Position (D1, D2) innerhalb des Speichers (42) entsprechend der Position (C1, C2), die durch die Positionsbestimmung (82) bestimmt wird, und zwar hinsichtlich den ursprünglichen PDL-Daten des einzigen Bilddatenstücks (250 bis 264); und
Löschen der Zwischensprachdaten (92, 96), die in dem einzigen, verschiedenen ersten Prozess erzeugt werden.

10. Bildabgabegerät (10) gemäß Anspruch 9, wobei
die Zwischensprachdatenerzeugungsvorrichtung (88) und die Bilddatenerzeugungsvorrichtung (102) dazu konfiguriert sind, Prozessthreads parallel durchzuführen, wobei eine Anzahl der Prozessthreads identisch N ist, und
die N Prozessthreads jeweils den ersten Prozess und den zweiten Prozess enthalten.

11. Computerprogramm (20, 22, 24) zum Erzeugen von einem einzigen Bilddatenstück in einem Rasterformat aus PDL-Daten, die durch eine Seitenbeschreibungssprache beschrieben sind, und zum Abgeben von vielen Bilddatenstücken (250 bis 264) als eine einzige Seite eines Abgabebilds, wobei das Computerprogramm (20, 22, 24) Befehle enthält, um einen Computer zum Durchführen von Folgendem zu veranlassen:
Eingeben der vielen Datendateien (150 bis 164), wobei die vielen Datendateien (150 bis 164) eine erste Datendatei einschließlich vielen Seiten von PDL-Daten, die durch eine erste Seitenbeschreibungssprache beschrieben sind, und eine zweite Datendatei einschließlich vielen Seiten von PDL-Daten aufweisen, die durch eine zweite Seitenbeschreibungssprache beschrieben sind, die sich von der ersten Seitenbeschreibungssprache unterscheidet;
Bestimmen für jede der vielen Datendateien (150 bis 164), die die erste Datendatei und die zweite Datendatei enthalten, hinsichtlich einer einzigen Seite von PDL-Daten, die in der Datendatei (150 bis 164) enthalten sind, einer Position (C1, C2), an der ein einziges Bilddatenstück (250 bis 264) entsprechend der einzigen Seite von PDL-Daten innerhalb des Abgabebilds anzuordnen ist;
Erzeugen von vielen Zwischensprachdatenstücken (92, 96), die durch dieselbe Zwischensprache beschrieben sind, aus den vielen Datendateien (150 bis 164), die die erste Datendatei und die zweiten Datendatei enthalten, indem für die vielen Datendateien (150 bis 164), die die erste Datendatei und die zweite Datendatei enthalten, jeweils hinsichtlich einer einzigen Seite von PDL-Daten, die in der Datendatei (150 bis 164) enthalten sind, ein einziges Zwischensprachdatenstück (92, 96) erzeugt wird, die durch die Zwischensprache beschrieben sind, und zwar nur aus der ersten Seite von PDL-Daten der jeweiligen Datendateien;
Erzeugen von vielen Bilddatenstücken (250 bis 264) innerhalb eines Speichers (42, 142) aus den vielen Zwischensprachdatenstücken (92, 96), indem für die vielen Zwischensprachdatenstücke (92, 96) jeweils ein einziges Bilddatenstück (250 bis 264) aus dem Zwischensprachdatenstück (92, 96) erzeugt wird und indem das einzige Bilddatenstück (250 bis 264) an einer Position (D1, D2) innerhalb des Speichers (42, 142) entsprechend der bestimmten Position (C1, C2) hinsichtlich den ursprünglichen PDL-Daten des einzigen Bilddatenstücks (250 bis 264) geschrieben wird; und
Abgeben der vielen Bilddatenstücke (250 bis 264) als eine einzige Seite des Abgabebilds gemäß den gespeicherten Inhalten des Speichers (42, 142).

## Revendications

1. Appareil de sortie d'image (10) configuré pour créer un élément de données d'image dans un format adressable par bit à partir de données PDL décrites par un langage de description de page, et sortir une pluralité d'éléments de données d'image (250 à 264) comme une page d'une image de sortie, l'appareil de sortie d'image (10) comprenant :
une mémoire (42, 142) ;
un dispositif d'entrée de fichier de données (12, 14) configuré pour entrer une pluralité de fichiers de données (150 à 164), dans lequel :
lorsque la pluralité de fichiers de données (150 à 164) inclut un premier fichier de données incluant une pluralité de pages de données PDL qui sont décrites par un premier langage de description de page, et un second fichier de données incluant une pluralité de pages de données PDL qui sont décrites par un second langage de description de page qui est différent du premier langage de description de page,
un dispositif de détermination de position (84) est configuré pour déterminer, pour chacun de la pluralité de fichiers de données (150 à 164) incluant le premier fichier de données et le second fichier de données, par rapport à une page de données PDL incluse dans le fichier de données (150 à 164), une position (C1, C2) dans laquelle un élément de données d'image (250 à 264) correspondant aux données PDL doit être disposé à l'intérieur de l'image de sortie ;
un dispositif de création de données de langage intermédiaire (88) est configuré pour créer une pluralité d'éléments de données de langage intermédiaire (92, 96) décrits par le même langage intermédiaire à partir de la pluralité de fichiers de données (150 à 164) incluant le premier fichier de données et le second fichier de données, en créant, pour chacun de la pluralité de fichiers de données (150 à 164) incluant le premier fichier de données et le second fichier de données, par rapport à une page de données PDL incluse dans le fichier de données (150 à 164), un élément des données de langage intermédiaire (92, 96) décrit par le langage intermédiaire à partir uniquement de la première page de données PDL de chaque fichier de données respectif ;
un dispositif de création de données d'image (102) est configuré pour créer une pluralité d'éléments de données d'image (250 à 264) à l'intérieur de la mémoire (42, 142) à partir de la pluralité d'éléments des données de langage intermédiaire (92, 96), en créant, pour chacun de la pluralité d'éléments des données de langage intermédiaire (92, 96), un élément des données d'image (250 à 264) à partir de l'élément de données de langage intermédiaire (92, 96), et en écrivant ledit un élément de données d'image (250 à 264) dans une position (D1, D2) à l'intérieur de la mémoire (42, 142) correspondant à la position (C1, C2) déterminée par le dispositif de détermination de position (84) par rapport aux données PDL originales dudit un élément de données d'image (250 à 264) ; et
un dispositif de sortie de données d'image (104, 46) est configuré pour sortir la pluralité d'éléments de données d'image (250 à 264) comme une page de l'image de sortie conformément aux contenus stockés de la mémoire (42, 142).

2. Appareil de sortie d'image (10) selon la revendication 1, dans lequel
le dispositif de création de données de langage intermédiaire (88) et le dispositif de création de données d'image (102) sont configurés pour effectuer un processus dans une unité d'un élément des données PDL,
le processus inclut :
la création d'un élément des données de langage intermédiaire (92, 96) à partir dudit élément de données PDL ;
la création d'un élément des données d'image (250 à 264) à partir dudit un élément de données de langage intermédiaire (92, 96) ;
l'écriture dudit un élément de données d'image (250 à 264) dans la position (D1, D2) à l'intérieur de la mémoire (42, 142) correspondant à la position (C1, C2) déterminée par le dispositif de détermination de position (84) par rapport aux données PDL originales dudit un élément de données d'image (250 à 264) ; et
la suppression dudit un élément de données de langage intermédiaire (92, 96).

3. Appareil de sortie d'image (10) selon la revendication 1 ou 2, dans lequel
si des données de langage intermédiaire prédéterminées (92, 96) sont créées à partir des données PDL incluses dans un fichier de données de la pluralité de fichiers de données avant que toutes les données de langage intermédiaire (92, 96) correspondant à une page de l'image de sortie aient été créées, le dispositif de création de données d'image crée un élément des données d'image (250 à 264) à partir des données de langage intermédiaire prédéterminées (92, 96), et commence à écrire ledit un élément de données d'image (250 à 264) dans la position à l'intérieur de la mémoire correspondant à la position déterminée par le dispositif de détermination de position par rapport aux données PDL originales dudit un élément de données d'image (250 à 264).

4. Appareil de sortie d'image (10) selon l'une quelconque des revendications 1 à 3, dans lequel
le dispositif de création de données de langage intermédiaire (88) est configuré pour effectuer une pluralité de premiers processus en parallèle, un nombre de la pluralité de premiers processus étant identique à un nombre de la pluralité d'éléments de données d'image (250 à 264) devant être sortis comme une page de l'image de sortie, et
chacun des premiers processus inclut la création des données de langage intermédiaire (92, 96) à partir des données PDL originales d'un élément différent de données d'image (250 à 264).

5. Appareil de sortie d'image (10) selon la revendication 4, dans lequel
la mémoire (42, 142) est une mémoire de page (142) configurée pour stocker les données d'image (250 à 264) correspondant à au moins une page de l'image de sortie,
le dispositif de création de données d'image (102) est configuré pour effectuer une pluralité de seconds processus en parallèle, un nombre de la pluralité de seconds processus étant identique à un nombre de la pluralité d'éléments de données d'image (250 à 264) devant être sortis comme une page de l'image de sortie, et
chacun des seconds processus inclut :
la création d'un élément des données d'image (250 à 264) à partir des données de langage intermédiaire (92, 96) créées dans un premier processus différent parmi la pluralité de premiers processus ;
l'écriture dudit un élément de données d'image (250 à 264) dans la position (D1, D2) à l'intérieur de la mémoire (142) correspondant à la position (C1, C2) déterminée par le dispositif de détermination de position (84) par rapport aux données PDL originales dudit un élément de données d'image (250 à 264) ; et
la suppression des données de langue intermédiaire (92, 96) créées dans ledit un premier processus différent.

6. Appareil de sortie d'image (10) selon la revendication 5, dans lequel
le dispositif de création de données de langage intermédiaire (88) et le dispositif de création de données d'image (102) sont configurés pour effectuer une pluralité de fils de processus en parallèle, un nombre de la pluralité de fils de processus étant identique à un nombre de la pluralité d'éléments des données d'image (250 à 264) devant être sortis comme une page de l'image de sortie, et
chacun des fils de processus inclut le premier processus et le second processus.

7. Appareil de sortie d'image (10) selon l'une quelconque des revendications 1 à 3, dans lequel
l'appareil de sortie d'image (10) est configuré pour sortir la pluralité d'éléments de données d'image (250 à 264) qui est disposée dans un motif de matrice de M rangées et N colonnes comme une page de l'image de sortie,
dans un cas où N est un entier supérieur à 1, le dispositif de création de données de langage intermédiaire (88) est configuré pour effectuer des premiers processus en parallèle, un nombre des premiers processus étant identique à N, et
chacun des N premiers processus inclut la création des données de langage intermédiaire (92, 96) à partir des données PDL originales d'un élément différent des données d'image (250 à 264) parmi N éléments des données d'image (250 à 264) qui doivent être disposés sur la même rangée (180, 182, 184).

8. Appareil de sortie d'image (10) selon la revendication 7, dans lequel
dans un cas où M est un entier supérieur à 1, chacun des N premiers processus comprend :
(1) la création des données de langage intermédiaire (92, 96) à partir des données PDL originales des données d'image (250 à 264) devant être disposées sur une première rangée (180) ;
(2) la création des données de langage intermédiaire (92, 96) à partir des données PDL originales des données d'image (250 à 264) devant être disposées sur une seconde rangée (182) qui est subséquente à la première rangée (180) ; et
(3) la détermination de si la seconde rangée (182) est une M-ième rangée, si la détermination de (3) est une détermination positive, le premier processus se termine, et si la détermination de (3) est une détermination négative, le processus de (2) est effectué en utilisant la seconde rangée (182) en (3) comme la première rangée (180) de (2).

9. Appareil de sortie d'image (10) selon la revendication 7 ou 8, dans lequel
la mémoire (42, 142) est une mémoire de bande (42) configurée pour stocker les données d'image (250 à 264) correspondant à au moins une bande de l'image de sortie,
le dispositif de création de données d'image (102) est configuré pour effectuer des seconds processus en parallèle, un nombre des seconds processus étant identique à N, et chacun des N seconds processus inclut :
la création d'un élément des données d'image (250 à 264) à partir des données de langue intermédiaire (92, 96) créés dans un premier processus différent parmi les N premiers processus,
l'écriture dudit un élément des données d'image (250 à 264) dans la position (D1, D2) à l'intérieur de la mémoire (42) correspondant à la position (C1, C2) déterminée par le dispositif de détermination de position (82) par rapport aux données PDL originales dudit un élément des données d'image (250 à 264) ; et
la suppression des données de langue intermédiaire (92, 96) créées dans ledit un premier processus différent.

10. Appareil de sortie d'image (10) selon la revendication 9, dans lequel
le dispositif de création de données de langage intermédiaire (88) et le dispositif de création de données d'image (102) sont configurés pour effectuer des fils de processus en parallèle, un nombre des fils de processus étant identique à N, et
chacun des N fils de processus inclut le premier processus et le second processus.

11. Programme informatique (20, 22, 24) pour créer un élément de données d'image dans un format adressable par bit à partir de données PDL décrites par un langage de description de page et sortir une pluralité d'éléments de données d'image (250 à 264) comme une page d'une image de sortie, le programme informatique (20, 22, 24) incluant des instructions pour ordonner à un ordinateur d'effectuer :
l'entrée d'une pluralité de fichiers de données (150 à 164), où la pluralité de fichiers de données (150 à 164) inclut un premier fichier de données incluant une pluralité de pages de données PDL qui sont décrites par un premier langage de description de page et un second fichier de données incluant une pluralité de pages de données PDL qui sont décrites par un second langage de description de page qui est différent du premier langage de description de page ;
la détermination, pour chacun de la pluralité de fichiers de données (150 à 164) incluant le premier fichier de données et le second fichier de données, par rapport à une page de données PDL incluse dans le fichier de données (150 à 164), d'une position (C1, C2) dans laquelle un élément de données d'image (250 à 264) correspondant à ladite une page de données PDL doit être disposé à l'intérieur de l'image de sortie ;
la création d'une pluralité d'éléments de données de langage intermédiaire (92, 96) décrits par le même langage intermédiaire à partir de la pluralité de fichiers de données (150 à 164) incluant le premier fichier de données et le second fichier de données, en créant, pour chacun de la pluralité de fichiers de données (150 à 164) incluant le premier fichier de données et le second fichier de données, par rapport à une page de données PDL incluse dans le fichier de données (150 à 164), un élément des données de langage intermédiaire (92, 96) décrit par le langage intermédiaire à partir uniquement de la première page de données PDL de chaque fichier de données respectif ;
la création d'une pluralité d'éléments de données d'image (250 à 264) à l'intérieur d'une mémoire (42, 142) à partir de la pluralité d'éléments des données de langage intermédiaire (92, 96), en créant, pour chacun de la pluralité d'éléments des données de langage intermédiaire (92, 96), un élément des données d'image (250 à 264) à partir de l'élément de données de langage intermédiaire (92, 96), et en écrivant ledit un élément de données d'image (250 à 264) dans une position (D1, D2) à l'intérieur de la mémoire (42, 142) correspondant à la position déterminée (C1, C2) par rapport aux données PDL originales dudit un élément de données d'image (250 à 264) ; et
la sortie de la pluralité d'éléments de données d'image (250 à 264) comme une page de l'image de sortie conformément aux contenus stockés de la mémoire (42, 142).
